# FASCICULE DE BREVET EUROPEEN

(11) **EP 1 509 810 B1**
(45) Date de publication et mention de la délivrance du brevet: **10.12.2008**
(21) Numéro de dépôt: 03752852.8
(22) Date de dépôt: 22.05.2003
(51) Int. Cl.: G02F 1/15, C09K 9/02

(54) **DISPOSITIF ELECTROCOMMANDABLE A PROPRIETES OPTIQUES ET/OU ENERGETIQUES VARIABLES**
ELEKTRISCH BETRIEBENE VORRICHTUNG MIT VARIABLEN OPTISCHEN UND/ODER ENERGETISCHEN EIGENSCHAFTEN
ELECTRICALLY-OPERATED DEVICE WITH VARIABLE OPTICAL AND/OR ENERGETIC PROPERTIES

(30) Priorité: 22.05.2002 FR 0206548
(43) Date de publication de la demande: 02.03.2005
(73) Titulaire: SAINT-GOBAIN GLASS FRANCE, 92400 Courbevoie (FR)
(72) Inventeur: BETEILLE, Fabien, F-31250 Revel (FR); MATHEY, Grégoire, F-92340 Bourg la Reine (FR)
(74) Mandataire: Jamet, Vincent
(86) Numéro de dépôt international: PCT/FR2003/001557
(87) Numéro de publication internationale: WO 2003/098339

(56) Documents cités:
- EP-A- 0 961 158
- DE-A- 19 834 834
- US-A- 5 253 100
- US-A- 5 293 546
- ARBIZZANI C ET AL: "Polymer-based symmetric electrochromic devices - Fundamentals and Applications" SOLAR ENERGY MATERIALS AND SOLAR CELLS, ELSEVIER SCIENCE PUBLISHERS, AMSTERDAM, NL, vol. 56, no. 3-4, janvier 1999 (1999-01), pages 205-211, XP004154407 ISSN: 0927-0248
- SAPP S A ET AL: "RAPID SWITCHING SOLID STATE ELECTROCHROMIC DEVICES BASED ON COMPLEMENTARY CONDUCTING POLYMER FILMS**" ADVANCED MATERIALS, VCH VERLAGSGESELLSCHAFT, WEINHEIM, DE, vol. 8, no. 10, 1 octobre 1996 (1996-10-01), pages 808-811, XP000626304 ISSN: 0935-9648

## Description

L'invention concerne les dispositifs électrocommandables à propriétés optiques et/ou énergétiques variables. Elle s'intéresse plus particulièrement aux dispositifs utilisant des systèmes électrochromes, fonctionnant en transmission ou en réflexion.

Des exemples de systèmes électrochromes sont décrits dans les brevets US-5 239 406 et EP-612 826.

Les systèmes électrochromes ont été très étudiés. Ils comportent de façon connue généralement deux couches de matériaux électrochromes séparées par un électrolyte et encadrées par deux électrodes. Chacune des couches électrochromes, sous l'effet d'une alimentation électrique, peut insérer réversiblement des charges, la modification de leur degré d'oxydation suite à ces insertions/désinsertions conduisant à une modification dans leurs propriétés optiques et/ou thermiques (par exemple, pour l'oxyde de tungstène, un passage d'une coloration bleue à un aspect incolore).

Il est d'usage de ranger les systèmes électrochromes en trois catégories :
➢ celle où l'électrolyte est sous forme d'un polymère ou d'un gel ; par exemple un polymère à conduction protonique comme ceux décrits dans les brevets EP-253 713 ou EP-670 346, ou un polymère à conduction d'ions lithium comme ceux décrits dans les brevets EP-382 623, EP-518 754 et EP-532 408 ; les autres couches du système étant généralement de nature minérale,
   - celle où l'électrolyte est une couche essentiellement minérale. On désigne souvent cette catégorie sous le terme de système « tout-solide », on pourra en trouver des exemples dans le brevet EP-867 752, EP-831 360, la demande de brevet français FR-2 791 147, la demande de brevet français FR-2 781 084,
   - celle où l'ensemble des couches est à base de polymères, catégorie que l'on désigne souvent sous le terme de système « tout-polymère ».

L'invention s'intéresse notamment aux systèmes électrochromes dits « tout-polymère ».

Beaucoup d'applications ont déjà été envisagées pour ces systèmes. Il s'est agit, le plus généralement, de les employer comme vitrages pour le bâtiment ou comme vitrages pour véhicule, notamment en tant que toits auto, ou encore, fonctionnant alors en réflexion et non plus en transmission, en tant que rétroviseurs anti-éblouissement.

Quelle que soit la catégorie du système électrochrome, celui-ci comporte généralement deux couches de matériau électrochrome séparées par une couche d'électrolyte et encadrées par deux couches conductrices, et il apparaît que les matériaux constituant les couches électrochromes sont dans tous les cas, qu'ils soient minéraux ou organiques, complémentaires et donc différents.

On connaît par le document EP-A-0 961 158 un dispositif électrocommandé à propriétés optiques/énergétiques de transmission ou de réflexions variables, comportant au moins un substrat porteur muni d'un empilement de couches à fonction électrochrome comprenant au moins deux couches actives électrochromes de nature identique, séparées par un électrolyte sous forme de gel, ledit empilement étant disposé entre deux amenées de courant.

On connaît par le document US-A-5 253 100 un dispositif électrochrome dans lequel une couche électrochromique et une couche électrolyte sont à base de matériaux polymères.

Enfin l'article « Solar energy Materials & Solar Cells 56 (1999) 205-211 décrit un dispositif électrochorme comportant un électrolyte liquide qui contient juste un sel et un solvant, sans présence de polymère. Ce document forme le préambule de la revendication 1.

La présente invention vise donc à pallier ces inconvénients en proposant un système électrochrome à structure simplifiée, de par le choix des matériaux (un seul matériau électrochrome) et le mode de dépôt.

L'invention a alors pour objet un dispositif électrocommandable à propriétés optiques/énergétiques de transmission ou de réflexion variables, tel que décrit à la revendication 1

Grâce à l'utilisation de ce matériau, il est possible d'élaborer des systèmes électrochromes symétriques. En effet les couches actives sont d'une part, réalisées dans un matériau identique et d'autre part, ces couches sont positionnées de part et d'autre de l'électrolyte. Les épaisseurs et les taux d'insertion initiaux des deux couches actives électrochromes sont calculés pour un contraste maximum.

Dans des modes de réalisation préférés de l'invention, on peut éventuellement avoir recours en outre à l'une et/ou à l'autre des dispositions suivantes :
- le matériau constituant l'électrolyte est choisi parmi les polyoxyalkylènes
- l'électrolyte contient du polyoxyéthylène,
- le matériau constituant l'électrolyte et le matériau constituant la couche active électrochrome sont polymérisés au sein d'un réseau interpénétré,
- le matériau constituant l'électrolyte et le matériau constituant la couche active électrochrome sont polymérisés au sein d'un réseau semi-interpénétré
- le réseau interpénétré ou semi-interpénétré présente un gradient de composition,
- le dispositif forme un système électrochrome ou à base de viologène,
- le dispositif constitue un toit auto pour véhicule, activables de façon autonome, ou d'une vitre latérale ou d'une lunette arrière pour véhicule,
- le dispositif constitue un pare-brise ou d'une portion de pare-brise,
- le dispositif est situé en partie haute du pare-brise, notamment sous forme d'une ou plusieurs bandes suivant le contour du pare-brise,
- le dispositif est situé en partie médiane du pare-brise, notamment pour éviter l'éblouissement du conducteur la nuit, à l'aide d'une régulation automatisée de son alimentation électrique utilisant au moins une caméra et/ou au moins un capteur de lumière,
- le dispositif constitue un panneau d'affichage d'informations graphiques et/ou alphanumériques, d'un vitrage pour le bâtiment, d'un rétroviseur, d'un hublot ou d'un pare-brise d'avion, ou d'une fenêtre de toit,
- le dispositif constitue un vitrage intérieur ou extérieur pour le bâtiment, ou est utilisé en tant que présentoir, comptoir de magasin pouvant être bombé, ou encore est utilisé en tant que vitrage de protection d'objet du type tableau, en tant qu'écran anti-éblouissement d'ordinateur, en tant que mobilier verrier,
- le dispositif fonctionne en transmission ou en réflexion,
- le dispositif comprend au moins un substrat transparent, plan ou bombé, clair ou teinté dans la masse, de forme polygonale ou au moins partiellement courbe,
- le dispositif comporte un substrat opaque ou opacifié,
- la conductivité électronique de l'une au moins des couches actives est suffisante pour remplacer les couches conductrices par un réseau de fils,
- les fils conducteurs viennent renforcer la conductivité des couches actives pour garantir l'homogénéité des colorations,
- le dispositif incorpore une autre fonctionnalité.

L'invention sera décrite plus en détail au regard des dessins annexés sur lesquels :
- la figure 1 est une vue schématique d'un dispositif électrocommandable selon l'invention, réalisé selon un premier mode de réalisation,

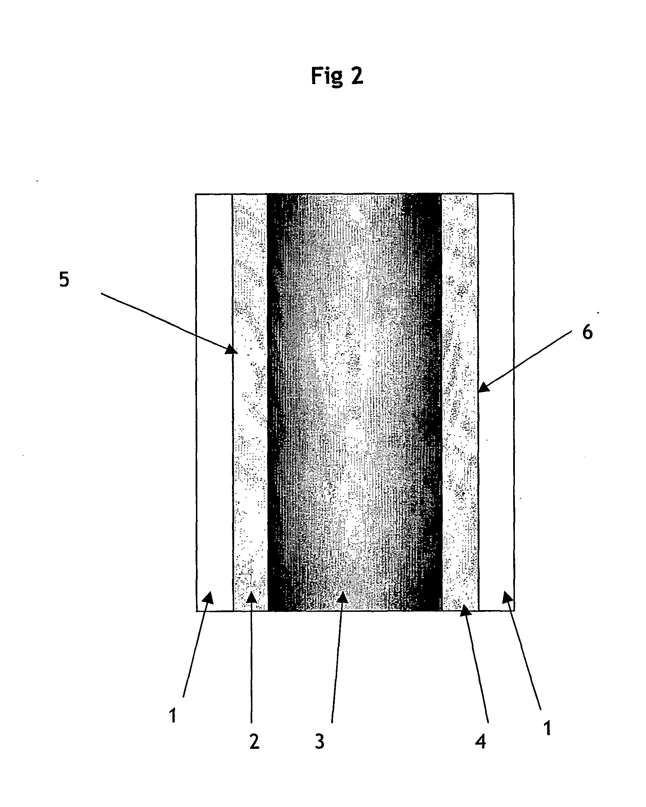

- la figure 2 est une vue schématique d'un dispositif électrocommandable selon l'invention, réalisé selon un deuxième mode de réalisation

Sur les dessins annexés, certains éléments peuvent être représentés à des dimensions plus grandes ou plus petites que dans la réalité, et ce afin de faciliter la compréhension des figures.

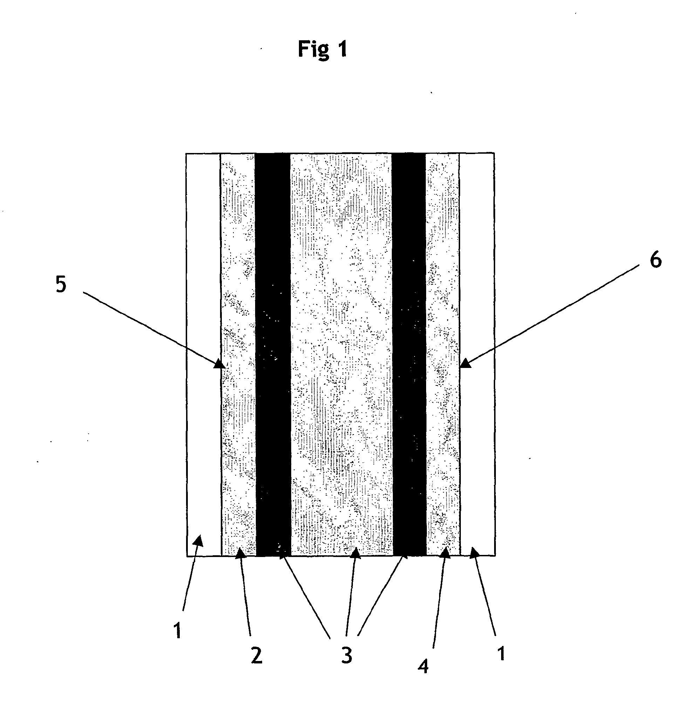

La figure 1 représente un verre 1 muni d'une couche conductrice inférieure 2, d'un empilement actif 3, surmonté d'une couche conductrice supérieure 4, d'un premier réseau de fils conducteurs 5 ou d'un dispositif équivalent permettant d'amener du courant électrique au-dessus de la couche conductrice supérieure, d'un second réseau de fils conducteurs 6 ou d'un dispositif équivalent permettant d'amener du courant électrique en dessous de la couche conductrice inférieure 2. Les amenées de courant sont soit des fils conducteurs si la couche active électrochrome est suffisamment conductrice, soit un réseau de fils cheminant sur ou au sein d'une couche formant électrode, cette électrode étant métallique ou du type TCO (Transparent Conductive Oxide) en ITO, SnO₂, ZnO :Al, soit une couche conductrice seule.

Les fils conducteurs 5, 6 sont des fils métalliques par exemple en tungstène (ou en cuivre), éventuellement recouvert de carbone, d'un diamètre compris entre 10 et 100 µm et préférentiellement compris entre 20 et 50 µm, rectilignes ou ondulés, déposés sur une feuille de PU par une technique connue dans le domaine de pare-brise chauffants à fils, par exemple décrite dans les brevets EP-785 700, EP-553 025, EP-506 521, EP-496 669.

Une de ces techniques connues consiste dans l'utilisation d'un galet de pression chauffé qui vient presser le fil à la surface de la feuille de polymère, ce galet de pression étant alimenté en fil à partir d'une bobine d'alimentation grâce à un dispositif guide-fil.

La couche conductrice inférieure 2 est un bicouche constitué d'une première couche SiOC de 50 nm surmontée d'une seconde couche en SnO₂ :F de 400 nm (deux couches de préférence déposées successivement par CVD sur le verre float avant découpe).

Alternativement, il peut s'agir d'un bicouche constitué d'une première couche à base de SiO₂ dopée ou non (notamment dopé avec de l'aluminium ou du bore) d'environ 20 nm surmontée d'une seconde couche d'ITO d'environ 100 à 350 nm (deux couches de préférence déposées successivement, sous vide, par pulvérisation cathodique assistée par champ magnétique et réactive en présence d'oxygène éventuellement à chaud).

La couche conductrice supérieure est une couche d'ITO de 100 à 300 nm, également déposée par pulvérisation cathodique réactive assistée par champ magnétique sur l'empilement actif ou est réalise de manière analogue à la couche conductrice inférieure 2.

L'empilement actif 3 représenté en figure 1 se décompose de la façon suivante :

Une première partie formée d'une couche de matériau électrochrome ou autrement appelée couche active, en poly(3, 4-éthylène-dioxythiophène) de 10 à 10000 nm, de préférence de 50 à 500 nm; en variante il peut s'agir de l'un des dérivés de ce polymère, est déposée par des techniques connues de dépôt par voie liquide (pulvérisation ou « spray coating », trempage ou « dip coating », pulvérisation rotative ou « spin coating » ou par coulée), ou encore par électrodéposition, sur un substrat revêtu de sa couche conductrice inférieure ou supérieure formant l'électrode (l'anode ou la cathode) ou plus généralement l'amenée de courant. Quel que soit le polymère constituant cette couche active, ce polymère est particulièrement stable, notamment au UV, et fonctionne par insertion-désinsertion d'ions lithium (Li+) ou alternativement d'ions H+.

Une seconde partie jouant le rôle d'électrolyte, et formée d'une couche d'épaisseur comprise entre 50 nm à 2000 µm, et de préférence comprise entre 50 nm à 1000 µm, est déposée par une technique connue de dépôt par voie liquide (pulvérisation ou « spray coating », trempage ou « dip coating », pulvérisation rotative ou « spin coating » ou par coulée), entre les première et troisième parties sur la première partie ou encore par injection. Cette seconde partie est à base de polyoxyalkylène, notamment du polyoxyéthylène (POE) ou l'un de des dérivés.

En variante, la seconde partie jouant le rôle d'électrolyte à base de polyoxyalkylène se présente sous la forme d'un réseau de polymère, conformé en un film auto-supporté.

Au sens de la présente invention, un film est dit « auto-supporté » lorsque de par ses propriétés mécaniques, il acquiert une cohésion qui le rend manipulable et conserve sa forme et ses dimensions, ce qui le rend aisément manipulable, transportable, assemblable. Ces propriétés sont obtenues sans la présence de substrat de renfort.

En variante, il peut s'agit d'un électrolyte de type minéral, à base par exemple d'oxyde hydraté de tantale, de zirconium, ou de silicium.

Cette seconde partie d'électrolyte déposée sur la couche de matériau électrochrome active, elle-même supportée par le substrat en verre ou analogue, est alors revêtue par une troisième partie dont la constitution est analogue à la première partie, à savoir cette troisième partie se décompose en un substrat, revêtu d'une amenée de courant (fils conducteurs, fils conducteurs + couche conductrice, couche conductrice uniquement), cette amenée de courant étant elle-même recouverte par une couche active.

L'ensemble des trois parties réalise un dispositif électrocommandable à propriétés optiques et/ou énergétiques variables selon un premier mode de réalisation.

Ce dispositif électrocommandable se distingue de ceux connus de l'art antérieur notamment par le fait que les couches de matériau électrochrome ou actif sont identiques, elles sont réalisées dans un matériau identique et permettent d'obtenir un empilement globalement électrochrome, générant des contrastes significatifs (entre 2 et 20).

On note cependant que les meilleurs résultats et/ou performances en termes de durabilité, de niveau de contraste sont obtenus avec des épaisseurs de couches électrochromes égales, contrairement aux solutions connues de l'art antérieur pour lesquelles des résultats sont obtenus avec des épaisseurs de couche électrochrome très différentes (l'une des couches possède une épaisseur comprise dans un rapport d'au moins 5 par rapport à l'autre).

On donne ci-après pour deux configurations différentes d'empilement (l'épaisseur totale des couches électrochromes A et B sont différentes (A se colore)), les valeurs de contraste obtenues par rapport à une configuration avantageuse de l'invention (A=B)

| Ratio (épaisseur couche A/ épaisseur couche B) | Contraste (T_{L} haute /T_{L} basse) |
|---|---|
| 0,18 | 1,5 |
| 0,4 | 2,1 |
| 1 | 2,6 |
| 2,5 | 2,5 |
| 5,7 | 1,8 |

| Ratio (épaisseur couche A/ épaisseur couche B) | Contraste (T_{L} haute /T_{L} basse) |
|---|---|
| 0,33 | 2,2 |
| 0,57 | 2,8 |
| 1 | 3,1 |
| 1,75 | 2,9 |
| 3,3 | 2,4 |

L'analyse du tableau montre que pour des valeurs d'épaisseur de couches de matériau électrochrome égales, les performances du système sont optimales (niveau de contraste atteint), et le système est meilleur au niveau de sa réversibilité (passage d'un état coloré à un état décoloré et réciproquement non limité par la couche d'épaisseur la plus petite).

Selon un deuxième mode de réalisation de l'invention, le dispositif électrocommandable n'est plus réalisé à la suite d'un assemblage successif de couches obtenues séparément mais à partir d'un film unique auto-supporté.

Ce film auto-supporté est défini de la manière suivante : il s'agit d'un film en polymère qui incorpore à la fois les deux couches de matériau électrochrome et l'électrolyte, et présentant ses propres propriétés mécaniques (tenue, rigidité...)

Selon une première variante de ce film auto-supporté, il est obtenu à partir d'un système plus complexe appelé réseau interpénétré de molécules de 3, 4-éthylène-dioxythiophène (PEDT) ou de ses dérivés et de polyoxyalkylène.

Une définition d'un réseau interpénétré (ou RIPS) est la suivante :c'est une matrice d'au moins deux polymères réticulés l'un dans l'autre. C'est un alliage de polymère qui combine les propriétés des polymères qui le constituent. Ce sont des matériaux dans lesquels les tailles des domaines délimités par l'enchevêtrement des polymères réticulés est généralement de l'ordre de quelques dizaines de nanomètres.

Selon une deuxième variante de ce film auto-supporté, il est obtenu à partir d'un système simple appelé réseau semi-interpénétré ou (semi-RIPS), les molécules de 3, 4-éthylène-dioxythiophène sont polymérisées dans un réseau de polyoxyalkylène (l'électrolyte). Par exemple, le réseau de polyoxyalkylène résulte de la copolymérisation radicalaire d'un polyoxyéthylène (POE) mono fonctionnel et d'un polyoxyéthylène (POE) bifonctionnel en proportions et longueurs variables. On appelle réseau semi-interpénétré toute matrice constituée d'au moins un réseau polymère et d'au moins un second polymère enchevêtré dans le premier réseau et ne formant pas un second réseau.

Quel que soit la variante de ce film auto-supporté et suivant ses conditions d'obtention, il est possible d'obtenir une pluralité de configurations de films allant d'un système à trois couches (hors couches électroconductrices formant les électrodes) bien distinctes (deux couches électrochrome séparées par une couche d'électrolyte) analogue dans sa constitution à celle obtenue avec le premier mode de réalisation à un système dont les interfaces sont plus ou moins diffuses, voire plus qu'une seule couche présentant des gradients de composition. Néanmoins, la conductivité électronique de l'une au moins des couches actives est suffisante pour remplacer les couches conductrices par un réseau de fils.

Ainsi, on réalise des RIPS ou des semi-RIPS dont la composition est par exemple la suivante.

| POE | PC (poly carbonate) | PEDT |
|---|---|---|
| 50% | 50% | 10% |
| 80% | 20% | 5% |
| 100% | 0% | 2% |

Le ratio POE/PC est exprimé en pourcentage du monomère initial. Le pourcentage de PEDT est exprimé par rapport au pourcentage de monomère de POE. La composition du réseau POE/PC est conforme à celle du mélange initial en monomère. Par contre le pourcentage de PEDT dans le réseau final est fonction du temps de polymérisation du monomère EDT. L'épaisseur du RIPS ou du semi-RIPS ainsi obtenu est comprise entre 50 à 2000 µm et de préférence comprise entre 250 à 500 µm.

Ces deux types de réseaux présentent un certain nombre d'avantages par rapport à une technique d'assemblage traditionnel (dispositif électrocommandable selon le premier mode de réalisation) :
- un seul film est utilisable industriellement pour insérer les fonctions électrochromes dans les applications envisagées (décrites ci-après)
- la copolymérisation des deux espèces de polymères (le polymère électrochrome et le polymère de l'électrolyte) génère des couches extérieures conductrices créant de facto des électrodes (anode et cathode) sans en présenter les inconvénients (le délaminage)
- le matériau électrochrome est protégé vis-à-vis de l'extérieur augmentant de ce fait la durée de vie du dispositif électrocommandable

Par ailleurs, les deux verres formant les substrats du dispositif électrocommandable décrits précédemment sont en verre clair plan, standard, silico-sodo-calcique d'environ 2 mm d'épaisseur chacun.

L'invention s'applique de la même manière à des verres bombés et/ou trempés.

De même, au moins un des verres peut être teinté dans la masse, notamment teinté en bleu ou en vert, en gris, bronze ou brun.

Les substrats utilisés dans l'invention peuvent aussi être à base de polymère (PMMA, PC...). On note aussi que les substrats peuvent avoir des formes géométriques très variées : il peut s'agir de carrés ou de rectangles, mais aussi de tout polygone ou profil au moins partiellement courbe, défini par des contours arrondis ou ondulés (rond, ovale, « vagues », etc...).

Par ailleurs, au moins un des deux verres (sur la face qui n'est pas munie du système électrochrome ou équivalent) peut être recouvert d'un revêtement comportant une autre fonctionnalité (cette autre fonctionnalité pouvant être par exemple un empilement anti-solaire, un empilement anti salissure ou autre). En tant qu'empilement anti-solaire, il peut s'agir d'un empilement de couches minces déposées par pulvérisation cathodique et comprenant au moins une couche d'argent. On peut ainsi avoir des combinaisons du type
- verre/système électrochrome/couches anti-solaire/verre.
- verre/système électrochrome/verre/thermoplastique/verre.
- verre/système électrochrome/thermoplastique/verre
- verre/thermoplastique/système électrochrome/thérmoplastique/verre.

Le thermoplastique peut être choisi parmi le PVB, PU,EVA

On peut aussi déposer le revêtement anti-solaire non pas sur un des verres, mais sur une feuille de polymère souple du type PET (polyéthylènetéréphtalate).

Pour des exemples de revêtements anti-solaires, on peut se reporter aux brevets EP 826 641, EP844 219, EP 847 965, WO99/45415, EP 1 010 677.

Le dispositif objet de l'invention précédemment décrit peut être aussi intégré au sein d'un « substrat » tri-verre, ce dernier étant avantageusement utiliser lors de l'élaboration de vitrages conformes aux exigences de sécurité.

## Revendications

1. Dispositif électrocommandable à propriétés optiques/énergétiques de transmission ou de réflexion variables, comportant au moins un substrat (1) porteur muni d'un empilement (3) de couches à fonction électrochrome comprenant au moins deux couches actives électrochromes d'épaisseurs égales, séparées par un électrolyte, ledit empilement étant disposé entre deux amenées de courant (2, 4), respectivement inférieure et supérieure d'épaisseurs égales « inférieure » correspondant à l'amenée de courant la plus proche du substrat porteur, par opposition à l'amenée de courant « supérieure » qui est la plus éloignée dudit substrat, **caractérisé en ce que** le matériau électrochrome constituant les deux couches actives est identique, et **en ce que** le matériau électrochrome contient un polymère conducteur contenant du poly (3, 4 - éthylène - dioxythiophène) ou l'un de ses dérivés, l'électrolyte étant un film auto-supporté.

2. Dispositif selon la revendication 1, **caractérisé en ce que** le matériau constituant l'électrolyte contient du polyoxyalkylène.

3. Dispositif selon la revendication 2, **caractérisé en ce que** l'électrolyte contient du polyoxyéthylène.

4. Dispositif selon l'une des revendications 1 à 3, **caractérisé en ce que** le matériau constituant l'électrolyte et le matériau constituant la couche active électrochrome sont polymérisés au sein d'un réseau interpénétré.

5. Dispositif selon l'une des revendications 1 à 3, **caractérisé en ce que** le matériau constituant l'électrolyte et le matériau constituant la couche active électrochrome sont polymérisés au sein d'un réseau semi-interpénétré.

6. Dispositif selon l'une des revendications 4 ou 5, **caractérisé en ce que** le réseau interpénétré ou semi-interpénétré présente un gradient de composition.

7. Dispositif selon l'une des revendications précédentes, ***caractérisé en ce qu'**il* s'agit d'un système électrochrome.

8. Dispositif selon l'une des revendications précédentes, ***caractérisé* en ce *qu'****il* s'agit d'un toit auto pour véhicule, activable de façon autonome, ou d'une vitre latérale ou d'une lunette arrière pour véhicule.

9. Dispositif selon l'une des revendications 1 à 6, ***caractérisé en ce qu'**il* s'agit d'un pare-brise ou d'une portion de pare-brise.

10. Dispositif selon la revendication 9, ***caractérisé en ce que*** le dispositif est situé en partie haute du pare-brise, notamment sous forme d'une ou plusieurs bandes suivant le contour du pare-brise.

11. Dispositif selon la revendication 9, ***caractérisé en ce que*** le dispositif est situé en partie médiane du pare-brise, notamment pour éviter l'éblouissement du conducteur la nuit, à l'aide d'une régulation automatisée de son alimentation électrique utilisant au moins une caméra et/ou au moins un capteur de lumière.

12. Dispositif selon l'une des revendications 1 à 7, ***caractérisé en ce qu'**il* s'agit d'un panneau d'affichage d'informations graphiques et/ou alphanumériques, d'un vitrage pour le bâtiment, d'un rétroviseur, d'un hublot ou d'un pare-brise d'avion, ou d'une fenêtre de toit.

13. Dispositif selon l'une des revendications 1 à 7, **caractérisé en ce qu'**il s'agit:
- d'un vitrage intérieur ou extérieur pour le bâtiment,
- d'un présentoir, comptoir de magasin pouvant être bombé,
- d'un vitrage de protection d'objet du type tableau,
- d'un écran anti-éblouissement d'ordinateur,
- d'un mobilier verrier.

14. Dispositif selon l'une des revendications précédentes, ***caractérisé en ce qu'**il* fonctionne en transmission ou en réflexion.

15. Dispositif selon l'une des revendications précédentes, ***caractérisé en ce qu'**il* comprend au moins un substrat transparent, plan ou bombé, clair ou teinté dans la masse, de forme polygonale ou au moins partiellement courbe.

16. Dispositif selon l'une des revendications précédentes, ***caractérisé en ce qu'****il* comporte un substrat opaque ou opacifié.

17. Dispositif selon l'une quelconque des revendications précédentes, **caractérisé en ce que** la conductivité électronique de l'une au moins des couches actives est suffisante pour realiser les amenées de courant par un réseau de fils.

18. Dispositif selon l'une quelconque des revendications précédentes, **caractérisé en ce que** des fils conducteurs viennent renforcer la conductivité des couches actives pour garantir l'homogénéité des colorations.

19. Dispositif selon l'une quelconque des revendications précédentes, **caractérisé en ce qu'**il incorpore une autre fonctionnalité, cette fonctionnalité pouvant être par exemple un empilement anti-solaire, un empilement anti-salissures ou autre.

## Claims

1. Electrically controllable device having variable optical/energy properties in transmission or in reflection, comprising at least one carrier substrate (1) provided with a stack (3) of electrochromic functional layers, including at least two electrochromic active layers with equal thicknesses, separated by an electrolyte, said stack being placed between two current leads (2, 4), namely the lower current lead and the upper current lead respectively, "lower" corresponding to the current lead closest to the carrier substrate, as opposed to the "upper" current lead which is furthest from said substrate, **characterized in that** the electrochromic material constituting the two active layers is identical, and **in that** the electrochromice material contains a conducts polymer containing poly(3,4-ethylene dioxythiophene) or one of its derivatives, the electrolyte being a self-supporting film.

2. Device according to Claim 1, **characterized in that** the material constituting the electrolyte contains polyoxyalkylene.

3. Device according to Claim 2, **characterized in that** the electrolyte contains polyoxyethylene.

4. Device according to one of Claims 1 to 3, **characterized in that** the material constituting the electrolyte and the material constituting the electrochromic active layer are polymerized within an interpenetrating network.

5. Device according to one of Claims 1 to 3, **characterized in that** the material constituting the electrolyte and the material constituting the electrochromic active layer are polymerized within a semi-interpenetrating network.

6. Device according to either of Claims 4 and 5, **characterized in that** the interpenetrating or semi-interpenetrating network has a composition gradient.

7. Device according to one of the preceding claims, **characterized in that** it is an electrochromic system.

8. Device according to one of the preceding claims, **characterized in that** it is a vehicle sunroof, that can be autonomously activated, or a vehicle side window or rear window.

9. Device according to one of Claims 1 to 6, **characterized in that** it is a windscreen or a portion of a windscreen.

10. Device according to Claim 9, **characterized in that** the device is located in the upper part of the windscreen, especially in the form of one or more bands going around the outline of the windscreen.

11. Device according to Claim 9, **characterized in that** the device is located in the middle part of the windscreen, especially in order to prevent the driver from being dazzled at night, by means of automated regulation of its power supply using at least one camera and/or at least one light sensor.

12. Device according to one of Claims 1 to 7, **characterized in that** it is a graphical and/or alphanumeric information display panel, architectural glazing, a rearview mirror, an aircraft windscreen or cabin window, or a roof window.

13. Device according to one of Claims 1 to 7, **characterized in that** it is:
- interior or exterior architectural glazing;
- a shop showcase or countertop display case, which may be curved;
- glazing for protecting an object of the painting type;
- an antiglare computer screen;
- glass furniture.

14. Device according to one of the preceding claims, **characterized in that** it operates in transmission or in reflection.

15. Device according to one of the preceding claims, **characterized in that** it includes at least one clear or bulk-tinted, flat or curved, transparent substrate of polygonal shape or at least partly curved.

16. Device according to one of the preceding claims, **characterized in that** it includes an opaque or opacified substrate.

17. Device according to any one of the preceding claims, **characterized in that** the electronic conductivity of at least one of the active layers is sufficient to produce the current leads with a grid of wires.

18. Device according to any one of the preceding claims, **characterized in that** conducting wires enhance the conductivity of the active layers in order to guarantee colour uniformity.

19. Device according to any one of the preceding claims, **characterized in that** it incorporates another functionality, it being possible for this functionality to be, for example, a solar-protection multilayer, an anti-fouling multilayer or other multilayer.

## Patentansprüche

1. Elektrisch regelbare Vorrichtung mit veränderlichen optischen/energetischen Transmissions- oder Reflexionseigenschaften, die mindestens ein Substrat (1) umfasst, das mit einem Aufbau (3) aus Schichten mit elektrochromer Funktion versehen ist, der mindestens zwei elektrochrome aktive Schichten mit gleicher Dicke, die durch einen Elektrolyten getrennt sind, umfasst, wobei dieser Aufbau zwischen zwei Stromzuführungen (2, 4), einer unteren und einer oberen, angeordnet ist, wobei "untere" der Stromzuführung entspricht, die dem Substrat am nächsten ist, im Gegensatz zu der "oberen" Stromzuführung, die die von dem Substrat am weitesten entfernte ist, **dadurch gekennzeichnet, dass** das die zwei aktiven Schichten bildende elektrochrome Material gleich ist, und dass das elektrochrome Material ein leitfähiges Polymer enthält, das Poly(3,4-Ethylendioxythiophen) oder eines seiner Derivate enthält, wobei der Elektrolyt ein selbsttragender Film ist.

2. Vorrichtung nach Anspruch 1, **dadurch gekennzeichnet, dass** das den Elektrolyten bildende Material Polyoxyalkylen enthält.

3. Vorrichtung nach Anspruch 2, **dadurch gekennzeichnet, dass** der Elektrolyt Polyoxyethylen enthält.

4. Vorrichtung nach einem der Ansprüche 1 bis 3, **dadurch gekennzeichnet, dass** das den Elektrolyten bildende Material und das die elektrochrome aktive Schicht bildende Material in einem sich gegenseitig durchdringenden Netz polymerisiert sind.

5. Vorrichtung nach einem der Ansprüche 1 bis 3, **dadurch gekennzeichnet, dass** das den Elektrolyten bildende Material und das die elektrochrome aktive Schicht bildende Material in einem sich gegenseitig halb durchdringenden Netz polymerisiert sind.

6. Vorrichtung nach Anspruch 4 oder 5, **dadurch gekennzeichnet, dass** das interpenetrierte oder halb interpenetrierte Netz einen Zusammensetzungsgradienten aufweist.

7. Vorrichtung nach einem der vorhergehenden Ansprüche, **dadurch gekennzeichnet, dass** es sich um ein elektrochromes System handelt.

8. Vorrichtung nach einem der vorhergehenden Ansprüche, **dadurch gekennzeichnet, dass** es sich um ein autonom aktivierbares Autodach oder eine Seitenscheibe oder eine Heckscheibe für ein Fahrzeug handelt.

9. Vorrichtung nach einem der Ansprüche 1 bis 6, **dadurch gekennzeichnet, dass** es sich um eine Frontscheibe oder einen Teil einer Frontscheibe handelt.

10. Vorrichtung nach Anspruch 9, **dadurch gekennzeichnet, dass** sie sich im oberen Teil einer Frontscheibe, insbesondere in Form eines oder mehrerer Bänder, die dem Umfang der Frontscheibe folgen, befindet.

11. Vorrichtung nach Anspruch 9, **dadurch gekennzeichnet, dass** sie sich im mittleren Teil einer Frontscheibe befindet, insbesondere, um mittels einer automatischen Regelung ihrer Stromversorgung, wobei mindestens eine Kamera und/oder mindestens ein Lichtsensor verwendet wird, eine Blendung des Fahrers bei Nacht zu verhindern.

12. Vorrichtung nach einem der Ansprüche 1 bis 7, **dadurch gekennzeichnet, dass** es sich um eine graphische und/oder alphanumerische Informationsanzeigetafel, eine Verglasung für das Bauwesen, einen Rückspiegel, ein Flugzeugbullauge bzw. eine -frontscheibe oder ein Dachfenster handelt.

13. Vorrichtung nach einem der Ansprüche 1 bis 7, **dadurch gekennzeichnet, dass** es sich um:
- eine Innen- oder Außenverglasung für das Bauwesen,
- ein Verkaufsmöbel, eine Ladentheke, das/die gebogen sein kann,
- eine Schutzverglasung für ein Objekt vom Typ eines Bildes,
- einen entspiegelten Computerbildschirm und
- ein Glasmöbel
handelt.

14. Vorrichtung nach einem der vorhergehenden Ansprüche, **dadurch gekennzeichnet, dass** sie mit Transmission oder Reflexion arbeitet.

15. Vorrichtung nach einem der vorhergehenden Ansprüche, **dadurch gekennzeichnet, dass** sie mindestens ein transparentes Substrat umfasst, das eben oder gebogen, klar oder in der Masse gefärbt mit polygonaler Form oder wenigstens teilweise gebogen ist.

16. Vorrichtung nach einem der vorhergehenden Ansprüche, **dadurch gekennzeichnet, dass** sie ein opakes oder opak gemachtes Substrat umfasst.

17. Vorrichtung nach einem der vorhergehenden Ansprüche, **dadurch gekennzeichnet, dass** die Elektronenleitfähigkeit mindestens einer der aktiven Schichten für die Herstellung der Stromzuführungen durch ein Drahtnetz ausreicht.

18. Vorrichtung nach einem der vorhergehenden Ansprüche, **dadurch gekennzeichnet, dass** die Leitfähigkeit der aktiven Schichten von leitfähigen Drähten erhöht wird, um die Gleichmäßigkeit der Färbungen zu gewährleisten.

19. Vorrichtung nach einem der vorhergehenden Ansprüche, **dadurch gekennzeichnet, dass** in sie eine weitere Funktionalität eingebaut ist, die beispielsweise ein Sonnenschutzaufbau, ein schmutzabweisender Aufbau oder ein anderer sein kann.
